Europäisches Patentamt

European Patent Office

Office européen des brevets

(19)

(11) **EP 1 392 616 B1**

(12) **FASCICULE DE BREVET EUROPEEN**

(45) Date de publication et mention
de la délivrance du brevet:
**15.03.2006 Bulletin 2006/11**

(21) Numéro de dépôt: **02745491.7**

(22) Date de dépôt: **06.06.2002**

(51) Int Cl.:
***C04B 28/06*** *(2006.01)*

(86) Numéro de dépôt international:
**PCT/FR2002/001928**

(87) Numéro de publication internationale:
**WO 2002/098815 (12.12.2002 Gazette 2002/50)**

(54) **PLAQUE A BASE DE LIANT CIMENTAIRE**

PLATTE AUF BASIS EINES ZEMENTBINDEMITTELS

CEMENT BINDER BASED BOARD

(84) Etats contractants désignés:
**AT BE CH CY DE DK ES FI FR GB GR IE IT LI LU
MC NL PT SE TR**

(30) Priorité: **07.06.2001 FR 0107462**

(43) Date de publication de la demande:
**03.03.2004 Bulletin 2004/10**

(73) Titulaire: **BPB plc**
**Stoke Poges**
**Slough**
**SL2 4JS (GB)**

(72) Inventeurs:
• **BOUSCAL, Patrice**
**73290 LA MOTTE SERVOLEX (FR)**
• **CHANTEREAU, Frédéric**
**F-92400 Courbevoie (FR)**
• **COLOMBET, Pierre**
**F-78980 Longnes (FR)**
• **DERUSCO, Christian**
**F-78260 Acheres (FR)**
• **LE ROLLAND, Bruno**
**F-78250 Oinville Sur Montcient (FR)**
• **NOWORYTA, Gilbert**
**F-78930 Breuil Bois Robert (FR)**

(74) Mandataire: **Santarelli**
**14, avenue de la Grande Armée,**
**B.P. 237**
**75822 Paris Cedex 17 (FR)**

(56) Documents cités:
**EP-A- 0 353 062        EP-A- 0 439 372
FR-A- 2 350 313         US-A- 4 286 992
US-A- 4 957 556         US-A1- 2001 000 738**

• **CHEMICAL ABSTRACTS, vol. 104, no. 24, 16 juin
1986 (1986-06-16) Columbus, Ohio, US; abstract
no. 212159z, I.TAKADA: "Mortar compositions"
XP000125102 & JP 61 040862 A (KIKUSUI
KAGAKU KOGYO CO.LTD.) 27 février 1986
(1986-02-27)**
• **PATENT ABSTRACTS OF JAPAN vol. 014, no. 039
(M-924), 24 janvier 1990 (1990-01-24) & JP 01
272450 A (CHICHIBU CEMENT CO LTD), 31
octobre 1989 (1989-10-31)**
• **PATENT ABSTRACTS OF JAPAN vol. 014, no. 068
(C-0686), 8 février 1990 (1990-02-08) & JP 01
290543 A (CHICHIBU CEMENT CO LTD), 22
novembre 1989 (1989-11-22)**

**Description**

La présente invention concerne des plaques à base de liant cimentaire.

Ici, on entend par plaque un produit mince globalement plat, dont la hauteur est faible, comparée aux deux autres dimensions, que la section droite soit rectiligne ou non, par exemple en créneaux, sinusoïdale telle qu'une tôle ondulée, ou autre.

Il est connu de préparer des mortiers légers à base de ciment, comprenant un liant et un granulat léger, ainsi que des granulats inertes, des régulateurs de prise et des fluidifiants.

Parmi ces mortiers, le document EP-A-181739 décrit une composition, dont le liant est produit par mélange d'un clinker de type sulfoalumineux, exempt de silicates, et d'un "sel" alcalin ou alcalino-terreux en milieu basique. Ce "sel" est une suspension aqueuse contenant du sulfate de calcium, de la chaux, de la bentonite et un accélérateur de durcissement. Le clinker sulfoalumineux se présente lui aussi sous forme d'une suspension aqueuse. Dans les deux cas, le rapport eau/solide utilisé est égal à 2,5. Ceci conduit à l'obtention de matrices cimentaires de performances mécaniques médiocres.

Dans le document EP-A-353062, il est proposé une formulation obtenue par mélange de clinker sulfoalumineux, d'une source de chaux (chaux, ciment Portland) et de fibres (organiques ou wollastonite), qui permet par exemple de fabriquer des plaques minces (15 mm d'épaisseur), légères (densité inférieure à 1). Cependant, une quantité d'eau élevée est utilisée, et les résistances mécaniques à 24 heures sont très faibles.

Le document WO94/29232 décrit une composition à base de sulfoaluminate de calcium $C_4A_3\overline{S}$(10-30 %), de ciment Portland (50-80 %), d'anhydrite (5 à 20 %) et de granulats légers en vue de produire des panneaux légers. Si les produits obtenus présentent une densité faible (de l'ordre de 0,6), les performances mécaniques restent médiocres au bout de 24 heures.

L'objectif de la présente invention est de proposer une composition, et donc une plaque, présentant à la fois un bon compromis entre performances mécaniques et densité, voisine de 1, de l'ordre de 0,8 à 1,5, et un bon compromis entre l'ouvrabilité initiale, le temps de prise et la vitesse de durcissement.

Le but de l'invention est donc de proposer une composition, et donc une plaque, à base d'un liant cimentaire, ne requérant que très peu d'eau et présentant une prise rapide, inférieure à 10 ou 20 minutes, ainsi qu'un durcissement rapide et élevé, c'est à dire par exemple des propriétés mécaniques de résistance à la compression $R_c$ > 5 MPa à 48 heures. Ladite composition doit en outre présenter un temps de maniabilité, ou d'ouvrabilité, suffisant pour la mise en oeuvre du mortier avant que la prise n'ait lieu.

Ce but est atteint par la composition à base de liant cimentaire, destinée à être additionnée d'eau pour fabriquer des plaques ou panneaux, le liant renfermant en poids :

- 30 à 80 % de ciment Portland,

- 20 à 70 % de clinker sulfoalumineux,

- de 5 à 20 % d'une source de sulfate de calcium

- et de 0,4 à 7 % ou mieux 0,5 à 7 % d'au moins un adjuvant plastifiant réducteur d'eau, ou superplastifiant haut réducteur d'eau.

De manière préférée, le clinker sulfoalumineux présente une teneur en $C_4A_3\overline{S}$ supérieure à 30 % environ.

De préférence, la composition est additionnée d'eau dans un rapport pondéral eau/liant compris entre environ 0,2 et environ 0,5. Parmi les adjuvants avantageux, on trouve ceux qui renferment le polymélamine sulfonate, ou un poly(méth)acrylate.

De manière avantageuse, la composition renferme jusqu'à 2 % environ d'un deuxième adjuvant, qui est retardateur. Ce deuxième adjuvant renferme un poly(méth)acrylate ou un gluconate ou l'acide citrique.

De façon surprenante, l'utilisation de la combinaison de ces deux types d'adjuvants, à savoir un polymélamine sulfonate, et un deuxième adjuvant poly(méth)acrylate ou gluconate ou acide citrique, permet :

grâce au premier, d'obtenir une fluidité élevée lors de la mise en oeuvre sans pour autant accroître le temps de prise,

et grâce au second, de retarder le temps de prise (pour accroître le temps d'utilisation du mortier) et d'améliorer son comportement rhéologique.

En outre, la variation des proportions relatives de ces deux types d'adjuvants précités permet de disposer d'un moyen de contrôle de la durée d'utilisation de ladite composition sans pénaliser l'ouvrabilité initiale, ni la vitesse de durcissement.

Les poly(méth)acrylates préférés pour la composition selon l'invention sont les fluidifiants à base acrylate décrits dans la demande de brevet FR-0 013 117 déposée le 13 octobre 2000, et en particulier le Cimfluid 2000 AC (Ciments Français) qui comprend un poly(oxyde d'éthylène) de faible masse et un copolymère de méthacrylate de sodium et de méthacrylate de poly(oxyde d'éthylène).

La source de sulfate de calcium peut être choisie parmi le plâtre, le gypse ou l'anhydrite, le plâtre étant préféré. Avantageusement, l'apport en sulfate par la source de sulfate de calcium est tel que le rapport massique r défini par :

$$r = [(SO_3)_a + (SO_3)_b] / (SO_3)_c$$

$(SO_3)_a$ étant la teneur en sulfate provenant de la source de sulfate de calcium,

$(SO_3)_b$ étant la teneur en sulfate libre provenant du clinker sulfoalumineux,

$(SO_3)_c$ étant la teneur en sulfate provenant du sulfoaluminate de calcium présent dans le clinker sulfoalumineux,

est compris entre 2 et 2,5.

La teneur en ciment Portland du corps de plaque selon l'invention peut être avantageusement comprise entre 50 et 70 % en poids du liant.

De manière préférée, le ciment Portland présente une surface spécifique (Blaine) comprise approximativement entre 2500 et 6000 cm$^2$/g, et celle du clinker sulfoalumineux est comprise approximativement entre 2500 et 7000 cm$^2$/g. A l'intérieur de ces gammes de surface spécifique, la cinétique d'hydratation du liant n'est pas modifiée de manière significative.

La composition du corps de plaque selon l'invention peut renfermer en outre un adjuvant carbonate alcalin, le carbonate de lithium ($Li_2CO_3$) étant préféré, en tant qu'accélérateur de durcissement.

Lorsque la composition ci-dessus est mélangée avec des granulats légers, ou avec une mousse, un corps de plaque est d'une densité voisine de 1 tout en présentant des performances de résistance mécanique à la compression et à la flexion élevées.

Les granulats légers, tels que des billes de polystyrène, sont dans des proportions telles que la densité finale soit voisine de 1, de l'ordre de 0,8 à 1,5. De préférence, les granulats légers ont une taille inférieure ou égale à 4 mm, voire même inférieure ou égale à 1 mm. Ce sont avantageusement des billes de polystyrène expansé, mais ils peuvent aussi comprendre des minéraux naturels, tel que du sable, ou des matériaux naturels expansibles, expansés ou non.

Le corps de plaque selon l'invention peut renfermer une mousse, par exemple obtenue à partir d'un agent moussant ; il peut aussi renfermer un agent entraîneur d'air.

De manière avantageuse, l'agent moussant ou l'agent entraîneur d'air renferme un tensio-actif, compatible avec un pH de 10 à 14. Ce tensio-actif est par exemple un composé à base de sels d'acide gras, ou d'alkyles sulfonate ou de résine vinsol.

Un procédé permettant de fabriquer, à partir d'une composition telle que ci-dessus, des plaques ou panneaux légers de tenue mécanique appréciable à court terme malgré leur faible densité, peut consister à :

a) mélanger une composition destinée à former le corps de la plaque avec de l'eau dans un rapport pondéral eau/liant compris approximativement entre 0,2 et 0,5 ou mieux entre 0,25 et 0,40 ;
b) déposer le mélange dans un moule.

En variante, le procédé comprend les étapes consistant à :

a) mélanger une composition destinée à former le corps de la plaque avec de l'eau dans un rapport pondéral eau/liant compris approximativement entre 0,2 et 0,5 ou mieux entre 0,25 et 0,40 ;
b) déposer le mélange sur un support défilant, lequel est entraîné en continu par un convoyeur à bande, ledit mélange passant sous un rouleau formeur pour former une plaque ;
c) découper la plaque obtenue au moins à longueur.

Selon une autre variante, le procédé comprend les étapes consistant à :

a) mélanger la composition avec de l'eau dans un rapport pondéral eau/liant compris approximativement entre 0,2 et 0,5 ou mieux entre 0,25 et 0,40 ;
b) déposer le mélange sur un support défilant, lequel est entraîné en continu par un convoyeur à bande, ledit mélange traversant un extrudeur formant une plaque ;

c) découper la plaque obtenue au moins à longueur.

Ce dernier présente comme principal avantage d'être réalisable en continu, grâce à la composition ci-dessus possédant une ouvrabilité initiale élevée, un temps de prise limité et un durcissement rapide autorisant la manipulation immédiate des plaques à l'issue de la période de prise. Le procédé permet par conséquent la fabrication d'un grand nombre de plaques en un temps limité. Les coûts de production de telles plaques sont considérablement réduits.

De manière préférée, dans l'étape a) du procédé, l'eau est ajoutée dans un rapport massique eau/liant compris approximativement entre 0,25 et 0,40.

De tels procédés permettent d'obtenir des plaques ou panneaux à base de liant cimentaire de densité voisine de 1, de l'ordre de 0,8 à 1,5.

Il est également possible de réaliser le dépôt selon l'étape b) sur un parement dit inférieur, qui augmente considérablement la résistance à la flexion des plaques.

A l'étape c), la découpe est avantageusement une découpe au jet d'eau, laquelle est propre et nette.

Avantageusement, la plaque porte sur une de ses faces, mieux sur chacune de ses faces, un parement en forme de grille ; la grille est en fibres de verre ; la grille est associée à un voile ; le voile est un mat, de préférence en fibres de verre.

Les plaques ainsi fabriquées sont également résistantes aux intempéries et au brouillard salin. Elles sont ainsi particulièrement adaptées pour être utilisées dans le secteur du bâtiment, pour former ou recouvrir des parois, planchers ou toitures, à l'intérieur ou à l'extérieur des bâtiments, et notamment dans des atmosphères très humides ou des zones fréquemment lavées au jet d'eau telles que les cuisines industrielles, les laboratoires agro-alimentaires, les douches ou salles de bains, les bassins, les piscines, les salles de bâtiments agricoles ou de boucheries industrielles

De telles plaques peuvent également être utilisées pour former ou recouvrir des parois, planchers ou toitures exposés à un brouillard salin.

Avantageusement, de telles plaques présentent une zone densifiée, de faible épaisseur.

Pour la mise en oeuvre des procédés ci-dessus, un extrudeur est du genre comportant une filière transversale d'extrusion, ladite filière étant au moins en partie soumise à vibrations.

Pour ce faire, la filière est munie d'une lèvre supérieure et d'une lèvre inférieure qui porte avantageusement au moins un vibreur, de préférence deux, sur sa face inférieure ; l'axe du(ou des) vibreur(s) est orientable horizontalement et/ou verticalement ; la distance entre les lèvres supérieure et inférieure de la filière est réglable ; les lèvres supérieure et inférieure sont les lames d'un extrudeur ou les rouleaux d'un rouleau formeur.

Avantageusement, la filière d'extrusion a la forme générale d'un rectangle dont les extrémités des longueurs se faisant face se rapprochent légèrement l'une de l'autre ; dès lors, deux des bords latéraux parallèles d'une plaque obtenue à partir d'un tel extrudeur sont légèrement amincis.

La présente invention sera mieux explicitée à l'aide des exemples illustratifs, mais non limitatifs, qui suivent ainsi qu'en référence aux dessins dans lesquels :

- la figure 1 est un diagramme représentatif d'un procédé ;
- les figures 2 à 4 montrent un extrudeur mis en oeuvre dans le procédé ci-dessus, la figure 2 étant une vue en élévation et les figures 3 et 4 des vues selon les flèches III et IV de la figure 2 respectivement ;
- la figure 5 est une vue analogue à la figure 3 et montre une variante ;
- la figure 6 est une vue en coupe partielle d'une plaque selon l'invention avant découpe de ses bords longitudinaux ;
- la figure 7 est une vue en coupe partielle d'une plaque selon l'invention après découpe de ses bords longitudinaux selon la ligne C de la figure 6 ;
- les figures 8 à 17 sont des vues schématiques analogues à la figure 6 montrant chacune une variante de plaque avant découpe de ses bords longitudinaux.

Le liant du corps de plaque comprend un mélange de ciment Portland, de clinker sulfoalumineux et une source de sulfate de calcium (anhydrite, plâtre ou gypse).

Par ciment Portland, il faut comprendre un ciment normalisé suivant la norme européenne EN 197-1 (de type I, II, III, IV et V). Des exemples de tels ciments sont le ciment Portland ordinaire ainsi que tout autre ciment avec ajouts (Portland composé, pouzzolanique, de haut fourneau, aux laitiers et aux cendres).

Les exemples de ciments ci-dessus présentent des surfaces spécifiques Blaine comprises entre environ 3700 cm$^2$/g et environ 5050 cm$^2$/g.

La teneur en ciment Portland dans le liant peut varier entre 30 et 80 %. Dans tout ce domaine, il est possible d'obtenir des formulations à prise rapide (temps de début de prise inférieur à 20 min). Une fourchette préférentielle se situe entre 50 et 70 % qui permet d'obtenir des performances mécaniques optimales.

Par clinker sulfoalumineux, il faut comprendre tout matériau résultant de la cuisson à une température comprise entre 900˚C et 1450˚C ("clinkérisation") de mélanges contenant au moins une source de chaux (par exemple les calcaires qui ont une teneur en CaO variant entre 50 % et 60 %), au moins une source d'alumine (par exemple les bauxites ou autre sous-produit de fabrication contenant de l'alumine), et au moins une source de sulfate (gypse, gypses chimiques, plâtre, anhydrite naturelle ou synthétique, cendres sulfocalciques). Le clinker sulfoalumineux utilisé dans la présente invention présente une teneur en $4CaO.3Al_2O_3.SO_3$ (aussi représenté par $C_4A_3\bar{S}$) supérieure à 30 %. Les analyses élémentaires et les constituants principaux de deux types de clinkers sulfoalumineux utilisables, caractérisés par des teneurs respectives en $C_4A_3\bar{S}$ supérieures à 47 % sont présentées dans les tabteaux I et II ci-après :

Tableau 1

| OXYDE | CLINKER 1 | CLINKER 2 |
|---|---|---|
| $SiO_2$ | 3,6 % | 7,6 % |
| $Al_2O_3$ | 45,3% | 27,9 % |
| $Fe_2O_3$ | 0,9% | 7,0 % |
| CaO | 37,0 % | 45,1% |
| $SO_3$ | 7,8 % | 7,9 % |
| $TiO_2$ | 2,6 % | 2,2 % |
| Autres | 2,8% | 2,3% |

Tableau II

| Constituants | CLINKER 1 | CLINKER 2 |
|---|---|---|
| $C_4A_3\bar{S}$ | 60 % | 47% |
| $CA, CA_2, C_{12}A_7$ | 14% | - |
| $C_2S$ | - | 22 % |
| $C_2AS$ | 17% | - |
| $C\bar{S}$ | - | 3% |
| $C_4AF$ | 3% | 22 % |
| CT | 4% | 4% |
| Autres | 2 % | 2 % |

La présence de chaux libre CaO peut être tolérée jusqu'à 10 % dans le clinker sulfoalumineux sans nuire aux propriétés d'usage du liant utilisé dans le cadre de la présente invention. Cette présence peut se produire lorsque, par exemple, le clinker est obtenu par cuisson à relativement basse température.

La teneur en clinker sulfoalumineux peut varier entre 20 % et 70 % dans le liant.

Lorsque la finesse (surface spécifique Blaine) du clinker sulfoalumineux se situe entre 2500 cm$^2$/g et 7000 cm$^2$/g, et particulièrement entre 3500 et 6500 cm$^2$/g, la cinétique d'hydratation du liant n'est pas significativement modifiée, et permet d'obtenir une prise et un durcissement rapides.

S'agissant de la source de sulfate, celle-ci peut être choisie indifféremment parmi le gypse (ou gypses chimiques), le plâtre, ou l'anhydrite (naturelle ou non), ou encore les cendres sulfocalciques. La teneur en $SO_3$ provenant de la source de sulfate peut aller jusqu'à 10 % en masse par rapport au liant total (ce qui correspond par exemple à une teneur en plâtre jusqu'à 20 % par rapport au liant total). Une composition privilégiée correspond à un apport en sulfate tel que le rapport massique r défini plus haut soit voisin de 2. C'est précisément dans ce cas que les conditions stoechiométriques de formation de l'ettringite sont respectées :

$$C_4A_3\bar{S} + 2C\bar{S}H_{0,5} + 37H \rightarrow C_6A\bar{S}_3H_{32} + 2AH_3$$

Cette composition privilégiée permet de garantir une durabilité accrue des plaques. En effet, l'absence de sulfate conduit à la formation de monosulfoaluminate de calcium $C4A\bar{S}H_x$ instable vis à vis par exemple des eaux sulfatées conduisant a posteriori à la formation d'ettringite expansive. A contrario, un excès de sulfate peut conduire à une instabilité des produits minces vis à vis de l'humidité.

Si on privilégie les résistances mécaniques à très court terme, le sulfate préféré de l'invention est le plâtre. Si l'on privilégie la plasticité, le sulfate préféré est l'anhydrite.

Par (super)plastifiant entrant dans la composition du liant adjuvanté, il faut comprendre tout composé organique capable d'améliorer la capacité de mise en oeuvre (ou ouvrabilité) du mortier léger. Il peut aussi dans le cas de la présente invention permettre une réduction d'eau significative, à ouvrabilité constante, qui contribue à l'obtention de performances mécaniques plus élevées, pour la confection de plaques légères.

Selon la norme EN 934-2 : 1997, un adjuvant réducteur d'eau permet de réduire la quantité d'eau nécessaire d'au moins 5 % par rapport à une composition cimentaire non adjuvantée, et un adjuvant haut réducteur d'eau permet de réduire la quantité d'eau nécessaire d'au moins 12 % par rapport à une composition cimentaire non adjuvantée.

Les adjuvants (super)plastifiants (haut) réducteur d'eau utilisés peuvent être des sels alcalins (Li, Na, K) ou alcalino-terreux (Ca, Mg) issus de la condensation entre l'acide β-naphtalène sulfonique et le formaldéhyde (type Cimfluid 230 ou 232 (Axim, Ciments Français)), entre la mélamine sulfonée et le formaldéhyde (type Cimfluid ML (Axim, Ciments Français)) ou de lignosulfonates.

Un adjuvant privilégié dans le cadre de la présente invention est le sel alcalin ou alcalino-terreux issu de la condensation entre la mélamine sulfonée et le formaldéhyde (type Cimfluid ML) qui permet d'obtenir une fluidité élevée et ne provoque pas de retard de prise significatif malgré les dosages élevés utilisés.

Les teneurs en Cimfluid ML varient entre 0,5 et 7 % (% massique par rapport au poids du liant).

Comme on le sait, de manière générale, est considéré comme retardateur de prise tout composé minéral ou organique permettant d'allonger significativement le temps de prise de la formulation d'un mortier sans pénaliser sa rhéologie. L'intérêt d'un tel adjuvant réside dans la possibilité de contrôler la prise de la formulation et de la retarder éventuellement, pour faciliter une bonne mise en oeuvre. Des retardateurs préférés sont l'acide citrique, les gluconates ou encore les polyacrylates ou polyméthacrylates (du type Cimfluid 2000 AC) qui apportent en outre une nette amélioration de l'ouvrabilité de la pâte.

Il est bien évident que la formulation idéale résulte d'un compromis entre le dosage en eau, la teneur en (super) plastifiant (haut) réducteur d'eau et la teneur en retardateur, de façon à obtenir l'ouvrabilité, le temps d'utilisation et les performances mécaniques souhaitées. Le rapport pondéral eau/liant utilisé est généralement compris entre 0,2 et 0,5. Au delà de cette valeur les performances mécaniques chutent de façon vertigineuse. Pour un rapport pondéral eau/liant inférieur à 0,2, il n'y a pas suffisamment d'eau pour satisfaire les réactions d'hydratation du liant ; il peut subsister alors du liant anhydre qui peut nuire à la durabilité du matériau en milieu humide. De façon préférentielle, le rapport eau/liant utilisé est compris entre 0,25 et 0,40.

EXEMPLES :

Préparation d'une composition de corps de plaque selon l'invention :

La formulation de la base est la suivante (composition 1) :

| | |
|---|---|
| CPA CEM I 52,5 | 60 g |
| Clinker sulfoalumineux (1) | 30 g |
| Gypse | 10 g |
| Adjuvant | x g |
| Eau totale | 30 g |
| (dont celle des adjuvants) | |

Dans cette composition cimentaire de base, ont été étudiées les différences de comportement en faisant varier les proportions relatives x, ainsi que la nature des adjuvants : compositions des exemples 1, 5, 7, 10 et 12, présentées ci-après.

Les mesures effectuées sur ces compositions sont les suivantes :

- *Mesure du temps d'utilisation :* Le mode opératoire consiste à suivre le comportement rhéologique de la composition en malaxage continu à vitesse imposée de 300 tr/min en fonction du temps. Le temps d'utilisation est alors défini par le temps au bout duquel le couple résistant mesuré est égal à 0,05 N.m. Le paramètre $\Delta t_2$ calculé correspond au temps nécessaire pour que le couple résistant mesuré passe de 0,05 N.m à 0,1 N.m. Il permet de rendre compte de la vitesse de durcissement de la composition : plus ce temps est court et plus la vitesse de durcissement est élevée.

- *Mesure de l'étalement initial :* Le mode opératoire consiste à effectuer une mesure rhéologique 1mn 20 après le gâchage. Celle-ci est effectuée à l'aide d'un anneau (appelé anneau de Smidth) dont les dimensions sont les suivantes : diamètre intérieur = 60mm, hauteur = 50mm. Le malaxage de la pâte est réalisé pendant 40 sec à la vitesse de 250 tr/min et la mesure de l'étalement est effectuée au bout de 1 min 20.

- *Mesure du temps de prise :* Le mode opératoire adopté consiste à mesurer en fonction du temps la résistance à la pénétration d'une aiguille cylindrique de 3 mm de diamètre dans la formulation à tester à l'aide du texturomètre TA XT2 *(Société Rhéo).* La vitesse et la distance de pénétration sont respectivement fixées à 2 mm/s et 10 mm de profondeur. Les temps de début et de fin de prise mesurés correspondent respectivement aux temps nécessaires pour obtenir une force de 10N et de 50N à la profondeur de 10 mm. Contrairement à la mesure du temps d'utilisation, la mesure du temps de prise est effectuée au repos sans perturber l'échantillon en cours de prise par un malaxage. Le paramètre $\Delta t_1$ calculé correspond au temps nécessaire pour que la force mesurée passe de 10 N à 50 N. Il permet de rendre compte de la vitesse de durcissement de la composition : plus ce temps est court et plus la vitesse de durcissement est élevée.

Les différentes compositions étudiées sont présentées ci-après :

EXEMPLE 1 :

Cette composition renferme la formulation de base et du superplastifiant Cimfluid ML seul:

| ADJUVANT x (g) ML* | ETALEMENT (mm) | TEMPS D'UTILISATION (min) | TEMPS DE DEBUT DE PRISE (min) | TEMPS DE FIN DE PRISE (min) | $\Delta t_1$ (min) | $\Delta t_2$ (min) |
|---|---|---|---|---|---|---|
| 2 | 146 | 6,8 | 14,0 | 21,5 | 7,5 | 2,0 |
| 4 | - | 18,0 | 14,8 | 25,6 | 10,8 | 3,3 |
| 8 | - | 17,0 | 16,5 | 27,0 | 10,5 | 3,6 |
| *ML=Cimfluid ML, (-):non mesuré* | | | | | | |

Une valeur de 60 mm correspond à un étalement nul (valeur du diamètre de cône utilisé pour la mesure).
Le superplastifiant Cimfluid ML seul donne des résultats satisfaisants.
Les exemples suivants (2 à 6) ont été réalisés également avec le superplastifiant Cimfluid ML seul.

EXEMPLE 2 : Comparaison de deux utilisations d'un clinker sulfoalumineux, de teneurs en sulfoaluminate de calcium $C_4A_3\overline{S}$ différentes.

Les formulations étudiées sont les suivantes :

| COMPOSITION | 2a | 2b |
|---|---|---|
| CEM I 52,5 | 60 g | 50g |
| Clinker sulfoalumineux | Type 1 (tableau I) 30 g | Type 2 (tableau I) 43 g |
| Teneur en $C_4A_3\overline{S}$ dans le clinker | 56 % | 35 % |
| Plâtre | 10 g | 7 g |
| Adjuvant = Cimfluid ML | 2 g | 2 g |
| Eau | 30 g | 30 g |

Les temps de début de prise mesurées sur les compositions 2a et 2b sont respectivement de 6 min et de 7 min 50 s. La composition 2a présente un rapport r égal à 2,48.

EXEMPLE 3 : Cet exemple montre les effets sur les temps de début et de fin de prise, de la teneur en ciment Portland dans le liant, avec une teneur en plâtre maintenue constante et égale à 10 %, le complément à 100 % étant du clinker sulfoalumineux. Ces essais sont réalisés en présence de 2 % de Cimfluid ML et en l'absence de granulats légers, le rapport massique eau/liant étant de 0,30.

Le tableau suivant montre que pour des teneurs en ciment Portland comprises entre 36 et 76 %, le temps de début de prise est égal ou inférieur à 10 minutes.

| Ciment PORTLAND % dans le liant | TEMPS (min) DE DEBUT DE PRISE | TEMPS (min) DE FIN DE PRISE |
|---|---|---|
| 36 | 10 | 13 |
| 54 | 6 | 8 |
| 60 | 6 | 8 |
| 68 | 7 | 9 |
| 76 | 8 | 10 |

EXEMPLE 4 :

A la composition 2a de l'exemple 2, on a ajouté 2 g de billes Polystyrène expansé.

Les mesures de temps de prise, ainsi que des résistances mécaniques à la flexion (Rf) et à la compression (Rc) ont été effectuées sur des éprouvettes (4 x 4 x 16) cm$^3$ de densité égale à 1 au bout de 20 min, 60 min et 24 heures. Les valeurs obtenues sont présentées sur le tableau ci-après :

| MESURE | VALEUR |
|---|---|
| DENSITE (à 20 min) | 1 |
| Rf (à 20 min) | 0,9 MPa |
| Rc (à 20 min) | 2,50 MPa |
| Rf (à 60 min) | 1,20 MPa |
| Rc (à 60 min) | 3,40 MPa |
| Rf (à 24 h) | 1,80MPa |
| Rc (à 24 h) | 8,80 MPa |

EXEMPLE 5 :

Avec une formulation identique à celle de l'exemple 4, mais en faisant varier la teneur en ciment Portland, les résistances mécaniques à la flexion (Rf) et à la compression (Rc) sur éprouvettes (4 x 4 x 16) cm$^3$ après 24 heures ont été mesurées. Les résultats sont présentés dans le tableau ci-après :

| TENEUR EN CIMENT PORTLAND % | DENSITE | 24 heures | |
|---|---|---|---|
| | | Rf(MPa) | Rc(MPa) |
| 47 | 0,98 | 1,6 | 10,2 |
| 60 | 1,00 | 1,8 | 8,8 |
| 63 | 1,01 | 2,1 | 9,0 |
| 66 | 0,99 | 1,7 | 8,3 |
| 68 | 0,99 | 1,7 | 8,3 |

EXEMPLE 6 : Utilisation de ciment Portland et de clinker sulfoalumineux de surfaces spécifiques (Blaine) différentes.

La formulation étudiée dans tous les cas est la composition 2a précédente à laquelle ont été rajoutées des billes de polystyrène de façon à obtenir une densité très proche de 1. L'influence de la surface spécifique (Blaine) du ciment Portland et de celle du clinker sulfoalumineux sur les performances mécaniques à très court terme ont été étudiées.

| Ciment Portland CEM I (*) | Surface Spécifique (Blaine) (cm$^2$/g) | Densité | t = 20 minutes | | t = 24 heures | |
|---|---|---|---|---|---|---|
| | | | Flexion Rf (MPa) | Compression Rc (MPa) | Flexion Rf (MPa) | Compression Rc (MPa) |
| 6a | 3720 | 0,95 | 1,0 | 3,1 | 1,9 | 8,7 |
| 6b | 4050 | 1,01 | 0,9 | .3,5 | 1,9 | 8,4 |
| 6c | 4420 | 0,95 | 0,9 | 3,2 | 1,9 | 7,4 |
| 6d | 5040 | 1,01 | 0,9 | 3,5 | 1,8 | 7,0 |
| Ciment sulfo alumineux (**) | Surface Spécifique (Blaine) (cm$^2$/g) | Densité | t = 20 minutes | | t = 24 heures | |
| | | | Flexion Rf (MPa) | Compression Rc (MPa) | Flexion Rf (MPa) | Compression Rc (MPa) |
| 6e | 3800 | 0,95 | 1,1 | 3,1 | 1,9 | 8,7 |
| 6f | 4500 | 1,02 | 1,2 | 2,9 | 1,9 | 9,8 |
| 6g | 5000 | 0,98 | 0,9 | 3,2 | 2,0 | 9,7 |
| (*) : la surface spécifique du clinker sulfoalumineux utilisée est égale à 4500 cm$^2$/g | | | | | | |
| (**) : la surface spécifique du ciment Portland utilisée est égale à 3720 cm$^2$/g | | | | | | |

Dans la fourchette de surface spécifique étudiée (3500-5500 cm$^2$/g) que ce soit dans le cas du clinker sulfoalumineux ou du ciment Portland, la cinétique d'hydratation de la composition 2a n'est pas significativement modifiée comme en témoignent les performances mécaniques obtenues qui sont similaires.

EXEMPLE 7 :

Les deux adjuvants : le superplastifiant (Cimfluid ML) et le retardateur poly(méth)acrylate (Cimfluid AC) sont utilisés simultanément à des teneurs présentées dans le tableau ci-dessous, dans la composition cimentaire de base :

| ADJUVANT x (g) | | ETALEMENT (mm) | TEMPS D'UTILISATION (min) | TEMPS DE DEBUT DE PRISE (min) | TEMPS DE FIN DE PRISE (min) | $\Delta t_1$ (min) | $\Delta t_2$ (min) |
|---|---|---|---|---|---|---|---|
| ML* | AC* | | | | | | |
| 2 | 0,3 | 156 | 16,5 | - | - | - | 2,1 |
| 2 | 0,6 | 202 | 26,3 | - | - | - | 2,2 |
| 2 | 1 | 217 | 32,2 | 14,2 | 25,5 | 11,3 | 2,2 |
| *ML=Cimfluid ML, *AC=Cimfluid 2000AC | | | | | | | |

L'utilisation de 2 % de Cimfluid ML permet d'obtenir une formulation cimentaire à prise et durcissement rapide utilisable dans le cadre de la fabrication de produits minces légers à base de ciment.
L'utilisation de Cimfluid 2000AC jusqu'à des teneurs de 1 % dans cet exemple permet de contrôler la durée d'utilisation de la composition de base (à 2 % de Cimfluid ML) qui peut aller jusqu'à environ 30 minutes. En outre, cet ajout permet d'accroître l'ouvrabilité initiale de la composition sans modifier de façon significative les temps de début et de fin de prise. Les valeurs de $\Delta t_1$ et $\Delta t_2$ montrent que, même avec 1 % de Cimfluid 2000AC, la vitesse de durcissement n'est que légèrement plus faible.

EXEMPLE 8 :

Avec une formulation identique à celle de la composition de l'exemple 4 avec une teneur en polymélamine sulfonate égale à 2 % et en ajoutant 1 % de poly(méth)acrylate, les résistances à la flexion (Rf) ont été mesurées après 1 h 30 et 24 heures directement sur des plaques minces fabriquées selon l'invention, de dimensions L = 100 mm, 1 = 75 mm, e = 12,5 mm, à partir de compositions où seule la teneur en ciment Portland varie. Des billes de polystyrène expansé de granulométrie ≤ 1 mm, ont été ajoutées au liant à raison de 2 % en masse. Les résultats sont présentés dans le tableau suivant :

| CIMENT PORTLAND (% dans liant) | DENSITE | 1 h 30 | 24 heures |
|---|---|---|---|
|  |  | Rf (MPa) | Rf (MPa) |
| 60 | 1,05 | 1,46 | 1,70 |
| 64 | 1,07 | 2,10 | 2,26 |
| 67 | 1,02 | 1,30 | 1,61 |
| 69 | 1,07 | 1,37 | 1,79 |

Comme on le voit, les résistances à la flexion sont notables dès 1h30.

EXEMPLES 9 et 9bis :

Dans ces exemples ont été comparées les performances mécaniques à la compression (Rc) et à la flexion (Rf) de deux compositions préparées en présence ou non de $Li_2CO_3$ (respectivement 9bis et 9).
Les formulations sont les suivantes :
. liant (100%)

| clinker sulfoalumineux 1 | 45 % |
|---|---|
| ciment Portland CEM I 52,5 | 40 % |
| Plâtre | 15 % |

. adjuvants ( % par rapport au liant)

- Cimfluid ML 1,5 %
- Cimfluid AC 2000 0,3 %
- billes de polystyrène (≤ 1 mm) 1,5 %
- $Li_2CO_3$ 0 % (ex. 9)
  0,5 % (ex. 9bis)

. eau 30 % par rapport au liant
Les performances obtenues sont présentées dans le tableau suivant :

| MESURE | Ex. 9 sans $Li_2CO_3$ | Ex. 9bis avec $Li_2CO_3$ |
|---|---|---|
| DENSITE (à 20 min) | 0,98 | 1,00 |
| TEMPS DE PRISE | < 8 min | < 8 min |
| Rf (20 min)<br>Rc (20 min) | 1,04 MPa<br>3,3 MPa | 1,7 MPa<br>5,8 MPa |
| Rf (24 heures)<br>Rc (24 heures) | 1,6 MPa<br>10,2 MPa | 1,9 MPa<br>12,6 MPa |

EXEMPLE 10 :

Le polymélamine sulfonate (Cimfluid ML) à une teneur de 2 % et l'acide citrique à des teneurs variables ont été ajoutés à la composition cimentaire de base. Les résultats obtenus sont présentés ci-après :

| ADJUVANT X(g) | | ETALEMENT (mm) | TEMPS D'UTILIS ATION (min) | TEMPS DE DEBUT DE PRISE (min) | TEMPS DE FIN DE PRISE (min) | $\Delta t_1$ (min) | $\Delta t_2$ (min) |
|---|---|---|---|---|---|---|---|
| ML* | acide citrique | | | | | | |
| 2 | 0,4 | 78 | 14,3 | 17,6 | 26,5 | 8,9 | 2,6 |
| 2 | 1 | 65 | 20,3 | 21,8 | 34,4 | 12,6 | 3,0 |
| 2 | 1,5 | 64 | 50,5 | - | - | - | 22,8 |
| *ML=Cimfluid ML | | | | | | | |

L'utilisation de l'acide citrique permet d'accroître le temps d'utilisation de la composition.

EXEMPLE 11 :

Dans la composition selon l'exemple 1, le poly(méth)acrylate a été remplacé par un adjuvant contenant un gluconate (Cimaxtard 101, Axim), dans les proportions suivantes :

| ADJUVANT X (g) | | ETALEMENT (mm) | TEMPS D'UTILISATION (min) | $\Delta t_2$ (min) |
|---|---|---|---|---|
| ML* | Cimaxtard 101 | | | |
| 2 | 0,25 | - | 8,5 | 2,0 |
| 2 | 0,50 | - | 13,0 | 2,0 |
| 2 | 1,00 | 120 | 22,0 | 3,5 |
| 2 | 1,5 | - | 23,5 | 4,0 |
| *ML=Cimfluid ML | | | | |

L'utilisation de Cimaxtard 101 permet d'accroître le temps d'utilisation de la composition sans pénaliser la rhéologie initiale.

EXEMPLE 12 :

Le poly(méth)acrylate (Cimfluid AC) seul a été ajouté à la composition cimentaire de base, dans les proportions indiquées ci-après :

| ADJUVANT x (g) AC* | ETALEMENT (mm) | TEMPS D'UTILISATION (min) | TEMPS DE DEBUT DE PRISE (min) | TEMPS DE FIN DE PRISE (min) | $\Delta t_1$(min) | $\Delta t_2$ (min) |
|---|---|---|---|---|---|---|
| 0,6 | 82 | 7,0 | 7,5 | 14,2 | 6,7 | 1,1 |
| 1 | 186 | 14,4 | 13,5 | 25,5 | 12,0 | 2,0 |
| 2 | 234 | 28,6 | 23,0 | 39,5 | 16,5 | 2,9 |
| *AC=Cimfluid 2000AC | | | | | | |

L'utilisation de Cimfluid 2000AC seul permet aussi d'étendre la durée d'utilisation de la composition jusqu'à environ 30 min. Cependant, dans le cas où il est possible d'obtenir un temps d'utilisation de 28,6 min, on peut constater que la valeur de $\Delta t_1$ est plus importante que celle mesurée avec le mélange [ML (2 %) - AC (1 %)] (voir exemple 7).

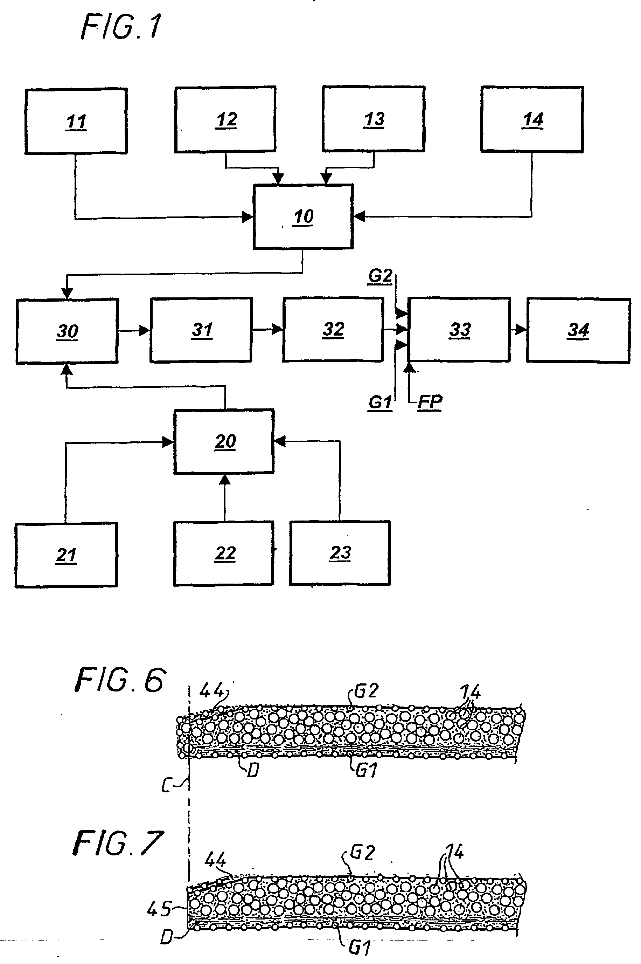

La figure 1 est un schéma illustrant un procédé de fabrication.

Un premier pré-mélange dosé 10 est réalisé à partir de ciment 11, d'un clinker 12, du plâtre 13 et de granulats 14, tels que des billes de polystyrène.

Un second pré-mélange dosé 20 est réalisé à partir d'un plastifiant 21 et d'un retardateur 23 auxquels on a ajouté de l'eau 22.

Les pré-mélanges 10 et 20 sont introduits dans un mélangeur 30 ; le mélange en résultant est repris par une pompe de reprise 31 et distribué par un distributeur 32 à l'entrée d'un extrudeur 33 ; la distribution est opérée, de manière homogène transversalement, entre deux parements inférieur et supérieur constitués de feuilles en forme de grilles, une grille inférieure G1 et une grille supérieure G2 ; la grille inférieure G1 repose sur une feuille de matière plastique FP, telle qu'une feuille de polyéthylène, tirée par un tapis roulant aval 43, figures 2 et 3, et glisse sur une table 46 disposée en amont de l'extrudeur 33 ; à la sortie de l'extrudeur 33, la plaque ainsi mise en forme est acheminée à un poste de découpe 34 où sa longueur et ses bords, donc sa largeur, sont découpés, avantageusement au jet d'eau.

Lors de ce procédé, chaque parement est constitué d'une grille G1,G2 et/ou d'un voile V, VB ; le voile V recouvre la grille G1, G2 sur toute sa largeur ; le voile est en forme de bande VB et ne recouvre que les bords latéraux de la grille G2 ; les bords latéraux des plaques sont préalablement formés par retournement de la grille G1 inférieure puis coupés droits ; la partie retournée de la grille inférieure G1 est recouverte de la grille supérieure G2 associée ou non à un voile V ; la partie retournée de la grille inférieure G1 recouvre la grille supérieure G2 associée ou non à un voile V ; les bords latéraux de la grille inférieure G1 sont associés à un voile V, VB.

Avantageusement, la coupe est faite dans la partie de recouvrement.

L'extrudeur 33 est représenté schématiquement en partie sur les figures 2 à 4. Il est constitué essentiellement d'une table 35 portée élastiquement par un châssis 36, grâce à des ressorts 37, ici quatre ressorts hélicoïdaux disposés aux quatre coins de la table 35 de forme générale rectangulaire. Le plateau supérieur 38 de la table 35 constitue la lèvre inférieure d'une filière 40, disposée transversalement et de section globalement rectangulaire, dont on voit en 39 la lèvre supérieure ; cette lèvre supérieure 39 est ici en forme de lame et réglable en hauteur par rapport à la lèvre inférieure 38 en sorte que l'on peut régler la hauteur de la filière 40, donc l'épaisseur souhaitée de la plaque.

A l'entrée de la filière 40, un déflecteur 41 légèrement incliné guide la matière vers celle-ci.

La table 35 porte sur sa face inférieure au moins un vibreur 42, ici deux vibreurs 42. Un vibreur 42 est par exemple constitué par un moteur électrique dont le rotor a un balourd, réglable, adapté à produire des vibrations.

A la sortie de l'extrudeur 33, est réalisée selon la flèche F des figures 2 et 3 une plaque en continu tirée par le tapis roulant 43.

Ici, les axes des vibreurs 42 sont parallèles à la flèche F ; cet axe peut être orienté dans un plan horizontal, comme illustré sur la figure 5 où l'on voit en traits mixtes une autre orientation des vibreurs 42 ; il peut également être orienté dans un plan vertical, le plan de la figure 2 par exemple ; ces orientations permettent d'influencer favorablement transversalement l'homogénéité de la composition à l'entrée de l'extrudeur 33.

Ici, la filière 40 a la forme générale d'un rectangle dont les extrémités 44 se rapprochent légèrement l'une de l'autre vers l'extérieur en sorte que les bords latéraux parallèles de la plaque qui en résulte sont du typé amincis, tel que cela est défini dans la norme NF P72-302 : cette disposition facilite la pose d'un enduit pour le jointoiement de deux plaques côte à côte, mais bien entendu ceci n'est pas obligatoire.

Les plaques sont enlevées du tapis après l'opération de distribution du mélange et de découpe ; la composition selon l'invention, la vitesse du tapis roulant et la longueur de la chaîne sont telles que, à cet instant, l'hydratation des plaques est telle que chaque plaque est manipulable.

La figure 6 montre partiellement en coupe une plaque selon l'invention avant que ses bords ne soient découpés ; on y reconnaît la grille inférieure G1, la grille supérieure G2, le bord aminci 44 et les granulats 14 ; ici, pour réaliser les bords de la plaque, la grille inférieure G1 est latéralement repliée jusqu'à recouvrir partiellement latéralement la grille supérieure G2.

On remarquera que, à la partie inférieure de la plaque, par rapport à la figure, une zone D de faible épaisseur est exempte de granulats 14 ; c'est donc une zone densifiée, obtenue grâce à la nature de la composition du corps de plaque et à l'extrusion sous vibrations ; grâce à cette zone, la tenue mécanique de la plaque est accrue.

En variante, la zone densifiée est rapportée, grâce au dépôt d'une couche exempte de granulats.

La figure 7 montre la plaque après découpe du bord 45 selon la ligne C de la figure 6.

Les bords latéraux parallèles sont droits.

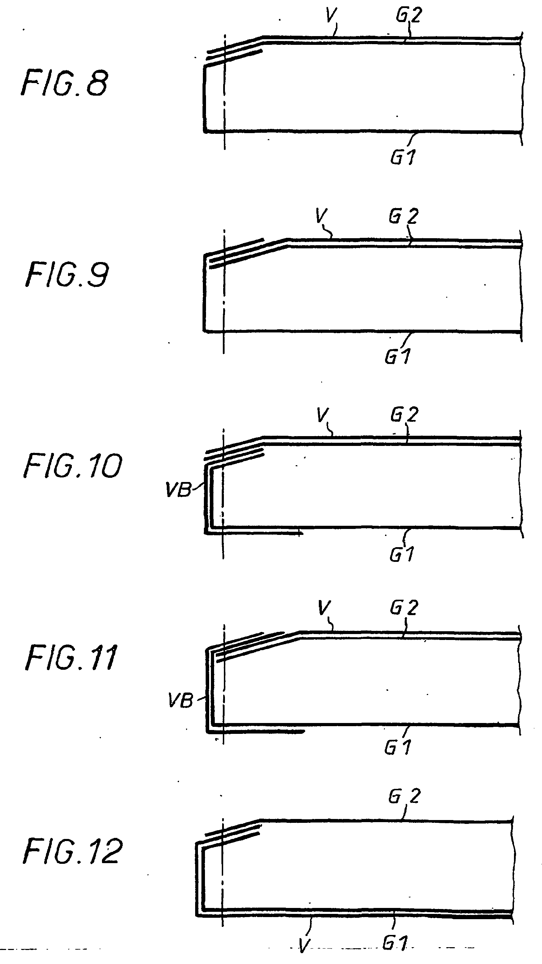

Ici, également, comme illustré sur la figure 9, la grille supérieure G2 peut porter, par exemple par collage, un voile V constitué d'un mat de fibres de verre, par exemple ; un tel voile V augmente encore la tenue mécanique de la plaque ; ici, le voile V recouvre la grille G2 sur toute sa largeur.

Bien entendu, d'autres dispositions peuvent être adoptées.

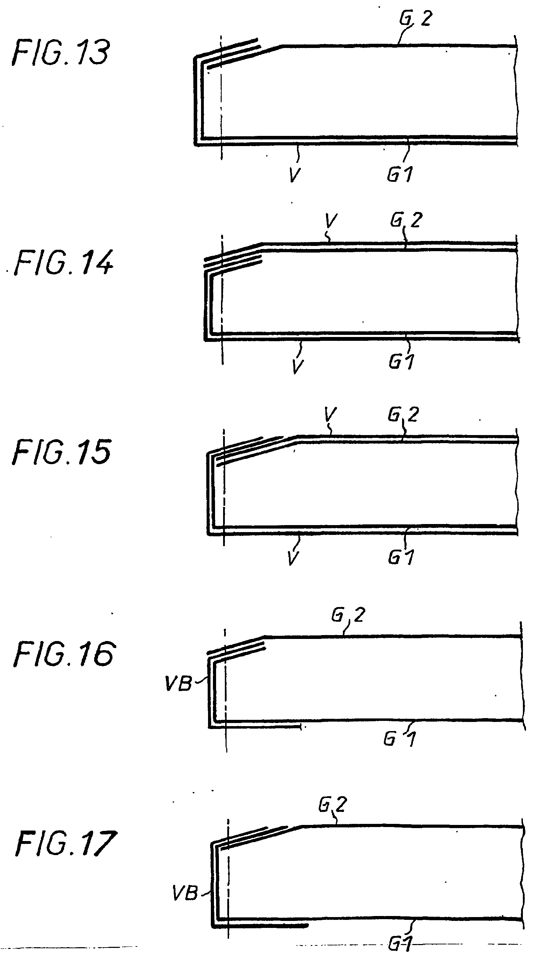

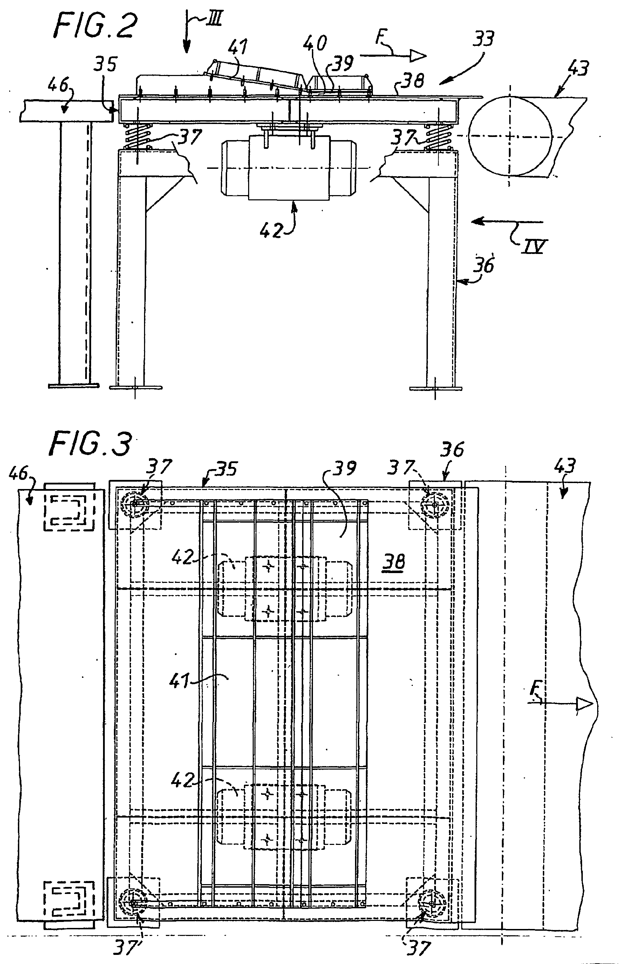

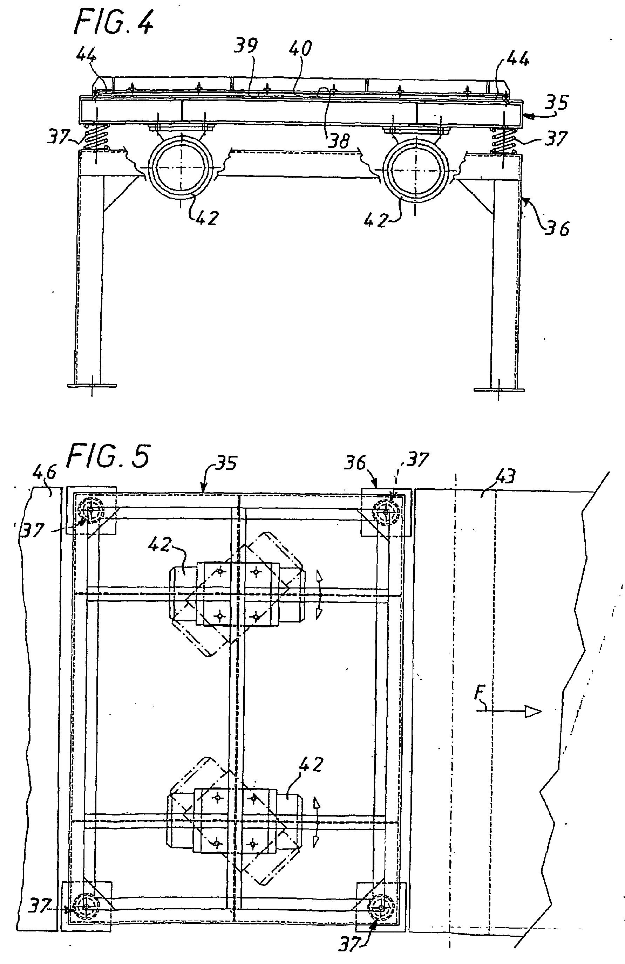

Ainsi, comme le montre la figure 8, la grille G2, associée à un voile V, recouvre la partie latéralement repliée de la grille inférieure G1. La figure 10 est analogue à la figure 8 sauf que la grille inférieure G1 est associée à une bande de voile VB assujettie par exemple par collage le long de ses bords longitudinaux en sorte que la grille supérieure G2, éventuellement associée à un voile V, recouvre la partie repliée de la bande de voile VB qui aide à la réalisation du bord de la plaque. La figure 11 combine les dispositions décrites a propos des figures 9 et 10, c'est-à-dire que c'est la grille inférieure G1 ainsi que la bande de voile VB qui recouvrent la grille supérieure G2 et son voile V. Bien entendu, la grille inférieure G1 pourrait également porter un voile, tel que le voile V ; ainsi, les figures 12-15 illustrent les cas où la grille inférieure G1 porte un voile V, le reste étant comme aux figures 8, 9 avec une grille supérieure G2 sans voile, figures 12-13, ou avec voile V, figures 14-15 ; la grille G1 est recouverte du voile V sur toute sa largeur. Les figures 16,17 montrent une disposition analogue à celles des figures 12,13, dans lesquelles le voile V associé à la grille inférieure G1 a été remplacé par une bande de voile latérale VB.

Le voile en forme de bande VB ne recouvre que les bords latéraux de la grille G1 et/ou G2 ; ainsi, la grille supérieure G2 recouvre au moins partiellement une partie de grille G1 inférieure associée ou non à un voile V, VB ; en variante, c'est la grille supérieure G2 qui est recouverte au moins partiellement d'une partie de grille G1 associée ou non à un voile V, VB.

En variante, la lèvre supérieure 39 est la génératrice inférieure d'un rouleau cylindrique monté tournant autour d'un axe transversal.

Avantageusement, une couche d'émulsion polymère de type latex (ou avec solvant organique) est déposée en surface de la plaque, sur une face ou sur les deux faces ; grâce à cette disposition, on obtient à la surface de la plaque un film protecteur. Ce film protecteur permet notamment de diminuer la perméabilité de la plaque, d'améliorer l'aspect de surface, de faciliter l'adhérence de tout revêtement tel que du carrelage et de limiter, dans une certaine mesure, les variations dimensionnelles de la plaque. Ce film protecteur peut être déposé par spray en surface, par coating avec rouleaux, par imprégnation de la (les) grille(s) associée ou non à un voile, soit par passage dans un bain, soit entre des rouleaux.

## Revendications

1.  Plaque dont le corps de plaque comprend un liant renfermant du ciment Portland, un clinker sulfoalumineux et une source de sulfate de calcium, **caractérisée par le fait que** le liant comprend en poids : 30 à 80 % de ciment Portland 20 à 70 % de clinker sulfoalumineux, de 5 à 20 % d'une source de sulfate de calcium, et de 0,4 à 7 % d'au moins un adjuvant plastifiant réducteur d'eau ou superplastifiant haut réducteur d'eau et en ce que ledit corps de plaque comprend des granulats légers.

2.  Plaque selon la revendication 1, **caractérisée par le fait que** les granulats légers sont dans des proportions telles que la densité finale du corps de plaque soit voisine de 1.

3.  Plaque selon la revendication 1, **caractérisée par le fait que** la densité finale du corps de plaque est de l'ordre de 0,8 à 1,5.

4.  Plaque selon l'une des revendications 1 à 3, caracténsée par le fait que le clinker sulfoalumineux présente une teneur en $C_4A_3\overline{S}$ supérieure à 30 % environ.

5.  Plaque selon l'une des revendications 1 à 4, **caractérisée par le fait que** l'adjuvant renferme un polymélamine sulfonate.

6.  Plaque selon l'une des revendications 1 à 5, **caractérisée par le fait que** l'adjuvant renferme un poly(méth)acrylate.

7.  Plaque selon l'une des revendications 1 à 6, **caractérisée par le fait qu'**elle renferme un deuxième adjuvant, qui est retardateur.

8.  Plaque selon la revendication 7, **caractérisée par** le lait qu'elle renferme jusqu'à 2% environ du deuxième adjuvant.

9.  Plaque selon l'une des revendications 7 ou 8, **caractérisée par le fait que** le deuxième adjuvant renferme un poly (méth)acrylate, de l'acide citrique ou un gluconate.

10. Plaque selon l'une des revendications 1 à 9, **caractérisée par le fait qu'**elle renferme en outre un adjuvant carbonate alcalin.

11. Plaque selon la revendication 10, **caractérisée par le fait que** le carbonate alcalin est $Li_2CO_3$.

12. Plaque selon l'une des revendications 1 à 11, **caractérisée par le fait que** la source de sulfate de calcium est du plâtre, du gypse ou de l'anhydrite.

13. Plaque selon l'une des revendications 1 à 12, **caractérisée par le fait que** l'apport en sulfate par la source de sulfate de calcium est tel que le rapport massique r défini par : $r = [(SO_3)_a + (SO_3)_b]/(SO_3)_c$ .

$(SO_3)_a$ étant la teneur en sulfate provenant de la source de sulfate de calcium,

$(SO_3)_b$ étant la teneur en sulfate libre provenant du clinker sulfoalumineux,

$(SO_3)_c$ étant la teneur en sulfate provenant du sulfoaluminate de calcium présent dans le clinker sulfoalumineux, est compris entre 2 et 2,5.

14. Plaque selon l'une des revendications 1 à 13, **caractérisée par le fait que** la teneur en ciment Portland est comprise entre 50 et 70 % en poids du liant.

15. Plaque selon l'une des revendications 1 à 14, **caractérisée par le fait que** la surface spécifique (Blaine) du ciment Portland est comprise approximativement entre 2500 et 6000 cm$^2$/g et celle du clinker sulfoalumineux comprise approximativement entre 2500 et 7000 cm$^2$/g.

16. Plaque selon l'une des revendications 1 à 15, **caractérisée par le fait qu'**elle est additionnée d'eau dans un rapport pondéral eau/liant compris entre environ 0,2 et environ 0.5, de préférence entre 0,25 et 0.40.

17. plaque selon l'une des revendicadons 1 à 16, **caractérisée par le fait qu'**elle comprend 60 g de ciment Portland, 30 g de clinker sulfoalumineux, 10 g de gypse, 2 à 4 g de polymélamine sulfonate, et 30 g d'eau.

18. Plaque selon l'une des revendications 1 à 16, **caractérisée par le fait qu'**elle comprend 60 g de ciment Portland, 30 g de clinker sulfoalumineux contenant 56 % de $C_4A_3\bar{S}$, 10 g de plâtre, 2 g de polymélamine sulfonate et 30 g d'eau.

19. Plaque selon l'une des revendications 1 à 16, **caractérisée par le fait qu'**elle comprend 50 g de ciment Portland, 43 g de clinker sulfoalumineux contenant 35 % de $C_4A_3\bar{S}$, 7 g de plâtre, 2 g de polymélamîne sulfonate, 30 g d'eau.

20. Plaque selon l'une des revendications 1 à 16, **caractérisée par le fait qu'**elle comprend 36 à 76 g de ciment Portland, 54 à 14 g de clinker sulfoalumineux, 10 g de plâtre, 2 g de polymelamine suffonate, eau dans un rapport massique eau/liant de 0.3.

21. Plaque selon l'une des revendications 1 à 16, **caractérisée par le fait qu'**elle comprend 60 g de ciment Portland, 30 g de clinker sulfoalumineux 10 g de platre, 2g de polymélamine sulfonate, 30 g d'eau 2 g de billes de polystyrène expansé.

22. Plaque selon l'une des revendications 1 à 16, **caractérisée par le fait qu'**elle comprend 47 à 68 g de ciment Portland, 43 à 22 g de clinker sulfoalumineux 10 g de plâtre, 2 g de polymélamine sulfonate, 30 g d'eau, 2 g de billes de polystyrène expansé.

23. Plaque selon l'une des revendications 1 à 16, **caractérisée par le fait qu'**elle comprend 60 g de ciment Portland de surface spécifique Blaine comprise entre 3720 et 5040 cm$^2$/g, 30 g de clinker sulfoalumineux de surface spécifique Blaine egale à 4500 cm$^2$/g, 10 g de plâtre, 2 g de polymélamine sulfonate, 30 g d'eau, 2g de billes de polystyrène expansé.

24. Plaque selon l'une des revendications 1 à 16, **caractérisée par le fait qu'**elle comprend 60 g de ciment Portland de surface spécifique Blaine égale à 3720 cm$^2$/g, 30 g de clinker sulfoalumineux de surface spécifique Blaine comprise entre 3800 et 5000 cm$^2$/g, 10 g de plâtre, 2 g de polymélamine sulfonate, 30 g d'eau, 2 g de billes de polystyrène expansé.

25. Plaque selon l'une des revendications 1 à 16, **caractérisée par le fait qu'**elle comprend 60 g de ciment Portland, 30 g de clinker sulfoalumineux, 10 g de gypse, 2 g de polymélamine sulfonate, 0,3 à 1 g de poly(méth)acrylate, 30 g d'eau.

26. Plaque selon l'une des revendications 1 à 16, **caractérisée par le fait qu'**elle comprend 60 à 69 g de ciment Portland, 30 à 21 g de clinker sulfoalumineux, 10 g de plâtre, 2 g de polymélamine sulfonate, 1 g de poly(méth)acrylate, 30 g d'eau, 2 g de billes de polystyrène expansé de taille $\leq$ 1 mm.

**27.** Plaque selon l'une des revendications 1 à 16, **caractérisée par le fait qu'**elle comprend 40 g de ciment Portland, 45 g de clinker sulfoalumineux, 15 g de plâtre, 1,5 g de polymélamine sulfonate, 0,3 g de poly(méth)acrylate, 30 g d'eau, 1,5 g de billes de polystyrène expansé de taille ≤ 1 mm.

**28.** Plaque selon l'une des revendications 1 à 16, **caractérisée par le fait qu'**elle comprend 40 g de ciment Portland, 45 g de clinker sulfoalumineux, 15 g de platre, 1,5 g de polymélamine sulfonate, 0,3 g de poly(méth)acrylate, 0,5 g de carbonate alcalin (Li$_2$CO$_3$), 30 g d'eau, 1,5 g de billes de polystyrène expansé de taille ≤1 mm.

**29.** Plaque selon l'une des revendications 1 à 16, **caractérisée par le fait qu'**elle comprend 60 g de ciment Portland, 30 g de clinker sulfoalumineux, 10 g de gypse, 2 g de polymélamine sulfonate, 0,4 à 1,5 g d'acide citrique, 30 g d'eau.

**30.** Plaque selon l'une des revendications 1 à 16, **caractérisée par le fait qu'**elle comprend 60 g de ciment Portland, 30 g de clinker sulfoalumineux, 10 g de gypse, 2 g de polymélamine sulfonate, 0.25 à 1.5 g de gluconate, 30 g d'eau.

**31.** Plaque selon l'une des revendications 1 à 16, **caractérisée par le fait qu'**elle comprend 60 g de ciment Portland, 30 g de clinker sulfoalumineux, 10 g de gypse, 0.6 à 2 g de poly(méth)acrylate, 30 g d'eau.

**32.** Utilisation de la plaque selon l'une des revendications 1 à 31 pour former ou recouvrir des murs, parois, planchers ou toitures, à l'intérieur ou à l'extérieur de bâtiments, tels que des cuisines industrielles, des laboratoires agro-alimentaires, des douches, des salles de bains, des bassins ou des piscines, et/ou des salles fréquemment lavées au jet d'eau, telles que salles de batiments agricoles ou de boucheries industrielles.

**Claims**

**1.** A board wherein the board body comprises a binder containing Portland cement, a sulfoaluminous clinker and a source of calcium sulfate, **characterized in that** the binder includes, by weight: 30 to 80% of Portland cement, 20 to 70% of sulfoaluminous clinker, 5 to 20% of a source of calcium sulfate and 0.4 to 7% of at least one water reducer plasticizer additive or high water reducer superplasticizer additive, and **in that** said board body includes light aggregates.

**2.** A board according to claim 1, **characterized in that** the light aggregates are in proportions such that the final specific gravity of the board body is close to 1.

**3.** A board according to claim 1, **characterized in that** the final specific gravity of the board body is of the order of 0.8 to 1.5.

**4.** A board according to any one of claims 1 to 3, **characterized in that** the sulfoaluminous clinker has a $C_4A_3\overline{S}$ content greater than approximately 30%.

**5.** A board according to any one of claims 1 to 4, **characterized in that** the additive includes a polymelamine sulfonate.

**6.** A board according to any one of claims 1 to 5, **characterized in that** the additive includes a poly(meth)acrylate.

**7.** A board according to any one of claims 1 to 6, **characterized in that** it includes a second additive which is a retarder.

**8.** A board according to claim 7 **characterized in that** it contains up to approximately 2% of the second additive.

**9.** A board according to either claim 7 or claim 8, **characterized in that** the second additive contains poly(meth) acrylate, citric acid or a gluconate.

**10.** A board according to any one of claims 1 to 9, **characterized in that** it further includes an alkaline carbonate additive.

**11.** A board according to claim 10, **characterized in that** the alkaline carbonate is Li$_2$CO$_3$.

**12.** A board according to any one of claims 1 to 11, **characterized in that** the source of calcium sulfate is plaster, gypsum or anhydrite.

13. A board according to any one of claims 1 to 12, **characterized in that** the contribution of sulfate by the source of calcium sulfate is such that the mass ratio r is from 2 to 2.5, where the mass ratio r is defined by the following equation:

$$r = [(SO_3)_a + (SO_3)_b] / (SO_3)_c$$

in which:

$(SO_3)_a$ is the content of sulfate coming from the source of calcium sulfate,
$(SO_3)_b$ is the content of free sulfate coming from the sulfoaluminous clinker, and
$(SO_3)_c$ is the content of sulfate coming from the calcium sulfoaluminate contained in the sulfoaluminous clinker.

14. A board according to any one of claims 1 to 13, **characterized in that** the Portland cement content is from 50 to 70% by weight of the binder.

15. A board according to any one of claims 1 to 14, **characterized in that** the approximate Blaine specific surface area of the Portland cement is from 2500 to 6000 $cm^2$/g and that of the sulfoaluminous clinker is from 2500 to 7000 $cm^2$/g.

16. A board according to any one of claims 1 to 15, **characterized in that** water is added to it in an approximate water/binder ratio by weight from 0.2 to 0.5 and preferably from 0.25 to 0.4.

17. A board according to any one of claims 1 to 16, **characterized in that** it comprises 60 g of Portland cement, 30 g of sulfoaluminous clinker, 10 g of gypsum, 2 to 4 g of polymelamine sulfonate and 30 g of water.

18. A board according to any one of claims 1 to 16, **characterized in that** it comprises 60 g of Portland cement, 30 g of sulfoaluminous clinker containing 56% $C_4A_3\overline{S}$ 10 g of plaster, 2 g of polymelamine sulfonate and 30 g of water.

19. A board according to any one of claims 1 to 16, **characterized in that** it comprises 50 g of Portland cement, 43 g of sulfoaluminous clinker containing 35% of $C_4A_3\overline{S}$, 7 g of plaster, 2 g of polymelamine sulfonate and 30 g of water.

20. A board according to any one of claims 1 to 16, **characterized in that** it comprises 36 to 76 g of Portland cement, 54 to 14 g of sulfoaluminous clinker, 10 g of plaster, 2 g of polymelamine sulfonate and water in a water/binder mass ratio of 0.3.

21. A board according to any one of claims 1 to 16, **characterized in that** it comprises 60 g of Portland cement, 30 g of sulfoaluminous clinker, 10 g of plaster, 2 g of polymelamine sulfonate, 30 g of water and 2 g of expanded polystyrene balls.

22. A board according to any one of claims 1 to 16, **characterized in that** it comprises 47 to 68 g of Portland cement, 43 to 22 g of sulfoaluminous clinker, 10 g of plaster, 2 g of polymelamine sulfonate, 30 g of water and 2 g of expanded polystyrene balls.

23. A board according to any one of claims 1 to 16 **characterized in that** it comprises 60 g of Portland cement with a Blaine specific surface area from 3720 to 5040 $cm^2$/g, 30 g of sulfoaluminous clinker with a Blaine specific surface area equal to 4500 $cm^2$/g, 10 g of plaster, 2 g of polymelamine sulfonate, 30 g of water and 2 g of expanded polystyrene balls.

24. A board according to any one of claims 1 to 16, **characterized in that** it comprises 60 g of Portland cement with a Blaine specific surface area equal to 3720 $cm^2$/g, 30 g of sulfoaluminous clinker having a Blaine specific surface area from 3800 to 5000 $cm^2$/g, 10 g of plaster, 2 g of polymelamine sulfonate, 30 g of water and 2 g of expanded polystyrene balls.

25. A board according to any one of claims 1 to 14, **characterized in that** it comprises 60 g of Portland cement, 30 g of sulfoaluminous clinker, 10 g of gypsum, 2 g of polymelamine sulfonate, 0.3 to 1 g of poly(meth)acrylate and 30 g of water.

26. A board according to any one of claims 1 to 16, **characterized in that** it includes 60 to 69 g of Portland cement, 30 to 21 g of sulfoaluminous clinker, 10 g of plaster, 2 g of polymelamine sulfonate, 1 g of poly(meth)acrylate, 30 g of water and 2 g of expanded polystyrene balls with a size $\leq$ 1 mm.

27. A board according to any one of claims 1 to 16, **characterized in that** it comprises 40 g of Portland cement, 45 g of sulfoaluminous clinker, 15 g of plaster, 1.5 g of polymelamine sulfonate, 0.3 g of poly(meth)acrylate, 30 g of water and 1.5 g of expanded polystyrene balls with a size $\leq$ 1 mm.

28. A board according to any one of claims 1 to 16, **characterized in that** it comprises 40 g of Portland cement, 45 g of sulfoaluminous clinker, 15 g of plaster, 1.5 g of polymelamine sulfonate, 0.3 g of poly(meth)acrylate, 0.5 g of alkaline carbonate ($Li_2CO_3$), 30 g of water and 1.5 g of expanded polystyrene balls with a size $\leq$ 1 mm.

29. A board according to any one of claims 1 to 16, **characterized in that** it comprises 60 g of Portland cement, 30 g of sulfoaluminous clinker, 10 g of gypsum, 2 g of polymelamine sulfonate, 0.4 to 1.5 g of citric acid and 30 g of water.

30. A board according to any one of claims 1 to 16, **characterized in that** it comprises 60 g of Portland cement, 30 g of sulfoaluminous clinker, 10 g of gypsum, 2 g of polymelamine sulfonate, 0.25 to 1.5 g of gluconate and 30 g of water.

31. A board according to any one of claims 1 to 16, **characterized in that** it comprises 60 g of Portland cement, 30 g of sulfoaluminous clinker, 10 g of gypsum, 0.6 to 2 g of poly(meth)acrylate and 30 g of water.

32. Use of a board according to any one of claims 1 to 31 to form or cover walls, partition walls, floors or roofs, inside or outside buildings, such as industrial kitchens, agriculture-foodstuffs laboratories, showers, bathrooms, pools or swimming pools, and/or rooms frequently washed with a water jet, such as rooms of agricultural buildings and industrial slaughterhouses.


**Patentansprüche**

1. Platte, deren Plattenkörper ein Bindemittel umfaßt, welches Portlandzement, einen Sulfoaluminiumklinker und eine Quelle für Calciumsulfat einschließt, **dadurch gekennzeichnet, daß** das Bindemittel in Gewicht umfaßt: 30 bis 80 % Portlandzement, 20 bis 70 % Sulfoaluminiumklinker, von 5 bis 20 % einer Quelle für Calciumsulfat und von 0,4 bis 7 % wenigstens eines wasser-reduzierenden Hilfsplastifizierungsmittels oder wasserhochreduzierenden Superplastifizierungsmittels, und daß dieser Plattenkörper Leichtgranulen umfaßt.

2. Platte gemäß Anspruch 1, **dadurch gekennzeichnet, daß** die Leichtgranulen in solchen Verhältnissen vorliegen, daß die Enddichte der Platte in der Nähe von 1 liegt.

3. Platte gemäß Anspruch 1, **dadurch gekennzeichnet, daß** die Enddichte der Platte in der Größenordnung von 0,8 bis 1,5 liegt.

4. Platte gemäß einem der Ansprüche 1 bis 3, **dadurch gekennzeichnet, daß** der Sulfoaluminiumklinker einen Gehalt an $C_4A_3\overline{S}$ oberhalb von ungefähr 30 % aufweist.

5. Platte gemäß einem der Ansprüche 1 bis 4, **dadurch gekennzeichnet, daß** das Hilfsmittel ein Polymelaminsulfonat einschließt.

6. Platte gemäß einem der Ansprüche 1 bis 6, **dadurch gekennzeichnet, daß** sie ein zweites Hilfsmittel, welches ein Verzögerer ist, einschließt.

7. Platte gemäß einem der Ansprüche 1 bis 6, **dadurch gekennzeichnet, daß** sie ein zweites Hilfsmittel, das ein Verzögerer ist, einschließt.

8. Platte gemäß Anspruch 7, **dadurch gekennzeichnet, daß** sie bis zu ungefähr 2 % von zweitem Hilfsmittel einschließt.

9. Platte gemäß einem der Ansprüche 7 oder 8, **dadurch gekennzeichnet, daß** das zweite Hilfsmittel ein Poly(meth) acrylat, Zitronensäure oder ein Gluconat einschließt.

**10.** Platte gemäß einem der Ansprüche 1 bis 9, **dadurch gekennzeichnet, daß** sie außerdem ein Alkalikarbonathilfsmittel einschließt.

**11.** Platte gemäß Anspruch 10 , dadur ch **gekennzeichnet**, daß daß das Alkalikarbonat $Li_2CO_3$ ist.

**12.** Platte gemäß einem der Ansprüche 1 bis 11, **dadurch gekennzeichnet, daß** die Calciumsulfatquelle gebrannter Gips, Gips oder Anhydrit ist.

**13.** Platte gemäß einem der Ansprüche 1 bis 12, **dadurch gekennzeichnet, daß** die Zufuhr an Sulfat durch die Calciumsulfatquelle derart ist, daß das Massenverhältnis r, definiert durch :

$$r = [(SO_3)_a + (SO_3)_b]/(SO_3)_c,$$

wobei
$(SO_3)_a$ der Gehalt an Sulfat ist, der aus der Calciumsulfatquelle herrührt,
$(SO_3)_b$ der Gehalt an freiem Sulfat ist, der aus dem Sülfoaluminiumklinker herrührt,
$(SO_3)_c$ der Gehalt an Sulfat ist, der aus in dem Sulfoaluminiumklinker vorhandenen Calciumsulfoaluminat herrührt,
zwischen 2 und 2,5 beträgt.

**14.** Platte gemäß einem der Ansprüche 1 bis 13, **dadurch gekennzeichnet, daß** der Gehalt an Portlandzement zwischen 50 und 70 Gew.-% des Bindemittels liegt.

**15.** Platte gemäß einem der Ansprüche 1 bis 14, **dadurch gekennzeichnet, daß** die spezifische Oberfläche (Blaine) des Portlandzementes annähernd zwischen 2500 und 6000 $cm^2$/g und diejenige des Sulfoaluminiumklinkers annähernd zwischen 2500 und 7000 $cm^2$/g liegt.

**16.** Platte gemäß einem der Ansprüche 1 bis 15, **dadurch gekennzeichnet, daß** sie mit Wasser in einem Gewichtsverhältnis Wasser/Bindemittel zwischen etwa 0,2 und etwa 0,5, bevorzugt zwischen 0,25 und 0,40 versetzt worden ist.

**17.** Platte gemäß einem der Ansprüche 1 bis 16, **dadurch gekennzeichnet, daß** sie 60 g Portlandzement, 30 g Sulfoaluminiumklinker, 10 g Gips, 2 bis 4 g Polymelaminsulfonat und 30 g Wasser umfaßt.

**18.** Platte gemäß einem der Ansprüche 1 bis 16, **dadurch gekennzeichnet, daß** sie 60 g Portlandzement, 30 g Sulfoaluminiumklinker, der 56% $C_4A_3\overline{S}$ enthält, 10 g gebrannten Gips, 2 g Polymelaminsulfonat und 30 g Wasser umfaßt.

**19.** Platte gemäß einem der Ansprüche 1 bis 16, **dadurch gekennzeichnet, daß** sie 50 g Portlandzement, 43 g Sulfoaluminiumklinker, der 56% $C_4A_3\overline{S}$ enthält, 7 g gebrannten Gips, 2 g Polymelaminsulfonat, 30 g Wasser umfaßt.

**20.** Platte gemäß einem der Ansprüche 1 bis 16, **dadurch gekennzeichnet, daß** sie 38 bis 76 g Portlandzement, 54 bis 14 g Sulfoaluminiumklinker, 10 g gebrannten Gips, 2 g Polymelaminsulfonat, Wasser in einem Massenverhältnis Wasser/Bindemittel von 0,3 umfaßt.

**21.** Platte gemäß einem der Ansprüche 1 bis 16, **dadurch gekennzeichnet, daß** sie 60 g Portlandzement, 30 g Sulfoaluminiumklinker, 10 g gebrannten Gips, 2 g Polymelaminsulfonat, 30 g Wasser, 2 g geblähte Polystyrolkugeln umfaßt.

**22.** Platte gemäß einem der Ansprüche 1 bis 16, **dadurch gekennzeichnet, daß** sie 47 bis 68 g Portlandzement, 43 bis 22 g Sulfoaluminiumklinker, 10 g gebrannten Gips, 2 g Polymelaminsulfonat, 30 g Wasser, 2 g geblähte Polystyrolkugeln umfaßt.

**23.** Platte gemäß einem der Ansprüche 1 bis 16, **dadurch gekennzeichnet, daß** sie 60 g Portlandzement mit einer spezifischen Oberfläche Blaine zwischen 3720 und 5040 $cm^2$/g, 30 g Sulfoaluminiumklinker mit einer spezifischen Oberfläche gleich 4500 $cm^2$/g, 10 g gebrannten Gips, 2 g Polymelaminsulfonat, 30 g Wasser, 2 g geblähte Polystyrolkugeln umfaßt.

24. Platte gemäß einem der Ansprüche 1 bis 16, **dadurch gekennzeichnet, daß** sie 60 g Portlandzement mit einer spezifischen Oberfläche Blaine gleich 3.720 cm$^2$/g, 30 g Sulfoaluminiumklinker mit einer spezifischen Oberfläche zwischen 3800 und 5000 cm$^2$/g, 10 g gebrannten Gips, 2 g Polymelaminsulfonat, 30 g Wasser, 2 g geblähte Polystyrolkugeln umfaßt.

25. Platte gemäß einem der Ansprüche 1 bis 16, **dadurch gekennzeichnet, daß** sie 60 g Portlandzement, 30 g Sulfoaluminiumklinker, 10 g Gips, 2 g Polymelaminsulfonat, 0,3 bis 1 g Poly-(meth)acrylat, 30 g Wasser umfaßt.

26. Platte gemäß einem der Ansprüche 1 bis 16, **dadurch gekennzeichnet, daß** sie 50 bis 69 g Portlandzement, 30 bis 21 g Sulfoaluminiumklinker, 10 g gebrannten Gips, 2 g Polymelaminsulfonat, 1 g Poly(meth)acrylat, 30 g Wasser, 2 g geblähte Polystyrolkugeln mit einer Größe von ≤ 1 mm umfaßt.

27. Platte gemäß einem der Ansprüche 1 bis 16, **dadurch gekennzeichnet, daß** sie 40 g Portlandzement, 45 g Sulfoaluminiumklinker, 15 g gebrannten Gips, 1,5 g Polymelaminsulfonat, 0,3 g Poly(meth)acrylat, 30 g Wasser, 1,5 g geblähte Polystyrolkugeln mit einer Größe von ≤ 1 mm umfaßt.

28. Platte gemäß einem der Ansprüche 1 bis 16, **dadurch gekennzeichnet, daß** sie 40 g Portlandzement, 45 g Sulfoaluminiumklinker, 15 g gebrannten Gips, 1,5 g Polymelaminsulfonat, 0,3 g Poly(meth)acrylat, 0,5 g Alkalikarbonat (Li$_2$CO$_3$), 30 g Wasser, 1,5 g geblähte Polystyrolkugeln mit einer Größe von ≤ 1 mm umfaßt.

29. Platte gemäß einem der Ansprüche 1 bis 16, **dadurch gekennzeichnet, daß** sie 60 g Portlandzement, 30 g Sulfoaluminiumklinker, 10 g Gips, 2 g Polymelaminsulfonat, 0,4 bis 1,5 g Zitronensäure, 30 g Wasser umfaßt.

30. Platte gemäß einem der Ansprüche 1 bis 16, **dadurch gekennzeichnet, daß** sie 60 g Portlandzement, 30 g Sulfoaluminiumklinker, 10 g Gips, 2 g Polymelaminsulfonat, 0,25 bis 1,5 g Gluconat, 30 g Wasser umfaßt.

31. Platte gemäß einem der Ansprüche 1 bis 16, **dadurch gekennzeichnet, daß** sie 60 g Portlandzement, 30 g Sulfoaluminiumklinker, 10 g Gips, 0,6 bis 2 g Poly(meth)acrylat, 30 g Wasser umfaßt.

32. Verwendung der Platte gemäß einem der Ansprüche 1 bis 31 zur Bildung oder zum Verputzen von Mauern, Wänden, Fußböden oder Decken, im Inneren oder Äußeren von Bauwerken, wie Industrieküchen, Laboratorien für Agro-Lebensmittel, Duschen, Badezimmern, Bassins oder Schwimmbädern und/oder mit Wasserstrahlen häufig gewaschenen Hallen, wie Hallen von landwirtschaftlichen Gebäuden oder industriellen Schlachtereien.

FIG.1

FIG.6

FIG.7

FIG.8

FIG.9

FIG.10

FIG.11

FIG.12

FIG.13

FIG.14

FIG.15

FIG.16

FIG.17

EP 1 392 616 B1

**FIG.2**

**FIG.3**

FIG.4

FIG.5